# EUROPÄISCHE PATENTSCHRIFT

(11) **EP 1 589 240 B1**
(45) Veröffentlichungstag und Bekanntmachung des Hinweises auf die Patenterteilung: **14.04.2010**
(21) Anmeldenummer: 05005313.1
(22) Anmeldetag: 10.03.2005
(51) Int. Cl.: F16C 29/00, F16C 29/06, F16C 33/64, B21D 53/10, B23P 15/00

(54) **Linearführungseinrichtung und Verfahren zu deren Herstellung**
Linear rolling element bearing and method of its manufacture
Palier à roulement linéaire et procédé de sa fabrication

(30) Priorität: 19.04.2004 DE 102004018820
(43) Veröffentlichungstag der Anmeldung: 26.10.2005
(73) Patentinhaber: Bosch Rexroth Mechatronics GmbH, 97424 Schweinfurt (DE)
(72) Erfinder: Küllstadt, Wolfgang, 97506 Grafenrheinfeld (DE); Kühnlein, Richard, 97782 Gräfendorf (DE); Wahler, Thomas, 97493 Bergrheinfeld (DE); Greubel, Roland, 97729 Ramsthal (DE); Dütsch, German, 97424 Schweinfurt (DE); Keller, Werner, 97535 Schwemmelsbach (DE); Dorn, Stefan, 97450 Arnstein (DE); Worcester, Steven, 97464 Niederwerrn (DE); Blaurock, Werner, 97464 Niederwerrn (DE)
(74) Vertreter: Herzog, Markus

(56) Entgegenhaltungen:
- EP-A- 0 258 714
- EP-A- 0 353 396
- WO-A-86/04651
- DE-A1- 4 428 558
- DE-B- 1 222 322
- US-A- 3 900 233
- US-A- 4 635 331
- US-A- 5 289 779
- US-A- 5 800 065
- US-A- 5 930 898
- US-A1- 2001 012 417

## Beschreibung

Die Erfindung betrifft eine Linearführungseinrichtung mit einer sich in einer Längsrichtung erstreckenden Führungsschiene und einem auf der Führungsschiene in Längsrichtung geführten Führungswagen, wobei an der Führungsschiene wenigstens eine Laufschiene angeordnet ist, welche wenigstens zwei Laufbahnen unterschiedlicher Lastübertragungsrichtung aufweist, welche durch einen lastfreien Oberflächenabschnitt voneinander getrennt sind.

Eine derartige Linearführungseinheit ist beispielsweise aus der US 5,800,065 bekannt. Bei der in dieser Druckschrift offenbarten Linearführungseinheit sind die Laufschienen in seitlichen Vertiefungen der Führungsschiene angeordnet, welche in diese zuvor durch spanende Bearbeitung, beispielsweise Fräsen, eingebracht worden sind, um die erforderliche Passgenauigkeit sicherstellen zu können. Diese spanende Bearbeitung erhöht den bei der Herstellung der Linearführungseinheit zu treibenden Aufwand und somit die Herstellungskosten der Linearführungseinheit beträchtlich. Obgleich in der Laufschiene lediglich die Kugeln eines einzigen Kugelumlaufs laufen, weist die Laufschiene zwei Laufbahnen unterschiedlicher Lastübertragungsrichtung auf. Die Wälzkörper berühren die Laufschiene nämlich in zwei voneinander durch einen lastfreien Oberflächenabschnitt getrennten Bereichen der Laufschiene. Zusammen mit einer entsprechend ausgebildeten, im Führungswagen angeordneten Laufschiene ergibt sich somit ein sogenannter Vier-Punkt-Kontakt der Kugeln.

Ergänzend sei noch auf die US 5,217,308 A, die DE 100 03 619 A1, die US 1,500,166 A, die EP 0 353 396 A1 und die DE 1 222 322 A verwiesen.

Aus der gattungsbildenden EP 0 213 160 B1 (bzw. WO 8 604 651 A) und der DE 44 28 558 A1 ist es grundsätzlich bekannt, eine Laufschiene an einer Führungsschiene durch Einrollieren zu befestigen. Hierzu ist die Führungsschiene an einem der Laufschiene zugeordneten Oberflächenabschnitt mit einer Mehrzahl von Stützrippen ausgebildet, welche beim Einrollieren verformt werden und somit eine präzise Relativanordnung von Laufschiene und Führungsschiene ermöglichen. Die Zustellrichtung des Einrollierwerkzeugs verläuft dabei im Wesentlichen in der Erstreckungsrichtung der Stützrippen, die ihrerseits im Wesentlichen in der Betriebslastübertragungsrichtung verläuft. Hierdurch kann ein seitliches Wegknicken der Stützrippen beim Einrollieren verhindert werden.

Demgegenüber ist es Aufgabe der vorliegenden Erfindung, eine Linearführungseinheit der eingangs genannten Art bereitzustellen, welche einfacher und kostengünstiger hergestellt werden kann.

Diese Aufgabe wird erfindungsgemäß durch eine Linearführungseinheit mit den Merkmalen des Anspruchs 1 gelöst. Bei der gattungsbildenden Linearführungseinheit ist die Führungsschiene in den den Laufbahnen der Laufschiene zugeordneten Oberflächenabschnitten jeweils mit einer Mehrzahl von Stützrippen ausgebildet, und sind die ein und derselben Laufbahn zugeordneten Stützrippen im Wesentlichen parallel zu der Lastübertragungsrichtung dieser Laufbahn ausgerichtet.

Es sei bereits an dieser Stelle darauf hingewiesen, dass die Längsrichtung der Führungsschiene im Zusammenhang mit der vorliegenden Erfindung als lokaler Parameter zu verstehen ist. Das heißt, dass die Führungsschiene nicht über ihre gesamte Länge geradlinig zu verlaufen braucht, sondern durchaus auch gebogene Abschnitte umfassen kann. In diesen gebogenen Abschnitten verläuft die Längsrichtung der Führungsschiene dann parallel zu der Tangente an den tatsächlichen Verlauf der Führungsschiene in diesen gebogenen Abschnitten. Darüber hinaus ist festzuhalten, dass der Führungswagen auf der Führungsschiene entweder über endlose Wälzkörperumläufe, beispielsweise Kugelumläufe, oder aber über Rollen geführt sein kann.

Um die beim Einrollieren der Laufschiene in die Führungsschiene zwischen diesen beiden wirkenden Prozesskräfte möglichst niedrig halten zu können, wird in Weiterbildung der Erfindung vorgeschlagen, dass die Laufschiene nur in den Laufbahnen zugeordneten Abschnitten an der Führungsschiene abgestützt ist.

Um die Laufschiene im Betrieb effektiv an der Führungsschiene abstützen zu können, wird vorgeschlagen, dass einer Laufbahn einer Laufschiene eine ungerade Anzahl von Stützrippen, vorzugsweise drei Stützrippen, zugeordnet ist. In diesem Fall lässt sich in einfacher Weise erreichen, dass die Betriebslastlinie durch die mittlere Stützrippe verläuft. Zur Erzielung einer möglichst hohen Steifigkeit ist es dabei ferner vorteilhaft, wenn die mittlere Stützrippe breiter ausgebildet ist als die ihr benachbarten Stützrippen.

Um auch bei der Herstellung der Laufschiene auf eine spanende Bearbeitung verzichten zu können, wird in Weiterbildung der Erfindung vorgeschlagen, dass die Laufschiene aus kaltumgeformtem, vorzugsweise kaltgewalztem, Material, vorzugsweise Stahl, gefertigt ist.

Wie dies aus dem Stand der Technik an sich bekannt ist, ist es auch bei der vorliegenden Erfindung bevorzugt, dass das Profil von zwei Laufbahnen zusammen die Form eines gotischen Spitzbogens aufweist. Die gotische Spitzbogenform hat sich in dem Fall, dass die Laufschiene mit den Wälzkörpern lediglich eines einzigen Wälzkörperumlaufs in Kontakt steht, zur Bereitstellung eines sogenannten Vier-Punkt-Kontakts als besonders günstig erwiesen. Gleichwohl können die Laufbahnen der Laufschiene der erfindungsgemäßen Linearführungseinheit auch jeweils mit den Wälzkörpern eines gesonderten Wälzkörperumlaufs oder jeweils mit einer gesonderten Führungsrolle in Kontakt stehen.

Ein sicherer Halt der Laufschiene an der Führungsschiene kann beispielsweise durch wenigstens eine an der Führungsschiene vorgesehene Lasche sichergestellt werden. Diese Lasche kann beispielsweise gleichzeitig mit dem Einrollieren der Laufschiene in die Führungsschiene ausgebildet werden. Ist beiden Rändern der Laufschiene eine derartige Haltelasche zugeordnet, so kann die Laufschiene in besonders einfacher Weise an der Führungsschiene befestigt werden.

Die Führungsschiene kann beispielsweise aus einem stranggepressten Profilmaterial aus Leichtmetall oder einer Leichtmetalllegierung, vorzugsweise aus Aluminium oder einer Aluminiumlegierung, gefertigt sein. Hierdurch ist es möglich, auf eine spanende Bearbeitung der Führungsschiene nach dem Strangpressen zu verzichten. Allerdings kann eine spanlose Kalibrierbearbeitung der Führungsschiene vorteilhaft sein.

Die Verformung der Führungsschiene beim Rollieren kann dazu führen, dass sich die Führungsschiene verbiegt, weil sie in dem durch das Rollieren verformten Bereich länger wird, im restlichen, unverformten Bereich ihre Länge jedoch beibehält. Um einer derartigen Verbiegung entgegenwirken zu können, wird in Weiterbildung der Erfindung vorgeschlagen, dass die Führungsschiene in einem durch das Einrollieren der wenigstens einen Laufschiene an sich nicht verformten Abschnitt, beispielsweise ihrem Fußabschnitt, wenigstens einen weiteren einrollierten Abschnitt aufweist. Als Fußabschnitt wird dabei derjenige Abschnitt der Führungsschiene bezeichnet, mit welchem diese auf der Montagefläche einer übergeordneten Konstruktionseinheit aufsteht.

Einer unerwünschten Verbiegung der Führungsschiene kann dann besonders effektiv entgegengewirkt werden, wenn der Schwerpunkt der verformten Querschnittsfläche der Führungsschiene mit dem Schwerpunkt der gesamten Querschnittsfläche der Führungsschiene im Wesentlichen zusammenfällt.

In der Praxis hat sich gezeigt, dass die Gestaltung der Laufschiene und der Stützrippen einen entscheidenden Einfluss auf die Dauerhaltbarkeit der Führungsschiene hat. Beispielsweise kann es an der Laufschiene zu Rissbildung kommen. Ein weiteres Problem besteht darin, dass sich die Laufschiene im Laufe der Zeit lockern kann. Grund hierfür sind Mikrobewegungen der Führungsschiene, die bei der Vorüberbewegung der Wälzkörper oder die Führungsrollen entstehen. Die ständig wechselnde Verformung führt zu Materialermüdung und schlimmstenfalls sogar zu Materialbruch. Es ist daher wichtig, die Abstützung der Laufschiene möglichst steif auszuführen, damit die Verformung derselben klein bleibt. Gleichzeitig ist aber zu beachten, dass die Stützrippen beim Rollierprozess plastisch verformt werden müssen. Hierbei muss einerseits eine genügend große Verformung möglich sein, damit die Rohteiltoleranzen ausgeglichen werden können. Andererseits darf die Prozesskraft nicht zu groß werden. Ferner ist zu berücksichtigen, dass nach dem Einrollieren eine gewisse elastische Rückfederung, die mit der Rippenhöhe steigt, stattfindet, wodurch sich die Genauigkeit, mit der die Führungsschiene gefertigt werden kann, verschlechtert. In der Praxis hat sich gezeigt, dass besonders günstige Verhältnisse dadurch erzielt werden können,
- dass im Fall der Führung des Führungswagens auf der Führungsschiene mittels wenigstens eines endlosen Wälzkörperumlaufs die Dicke der Laufschiene zwischen etwa 10% und etwa 35% des Wälzkörperdurchmessers beträgt,
   oder/und
- dass das Verhältnis der Summe der Breiten der einer Laufschiene zugeordneten Stützrippen zur Gesamtbreite der Laufschiene zwischen etwa 50% und etwa 70% beträgt;
   oder/und
- dass im Fall der Führung des Führungswagens auf der Führungsschiene mittels wenigstens eines endlosen Wälzkörperumlaufs das Verhältnis der Summe der Breiten der einer Laufbahn zugeordneten Stützrippen zum Wälzkörperdurchmesser zwischen etwa 30% und etwa 60% beträgt;
   oder/und
- dass das Verhältnis der Höhe einer Stützrippe zur Breite derselben Stützrippe zwischen etwa 0,5 und etwa 1,5 beträgt.

Die Erfindung betrifft darüber hinaus nach Anspruch 16 ein Verfahren zur Herstellung einer erfindungsgemäßen Linearführungsrichtung, welches dadurch gekennzeichnet ist, dass man ein Rollierwerkzeug mit einem Spitzbogenprofil verwendet, welches eine sehr enge Schmiegung zu den Laufbahnen aufweist. Unter "Schmiegung" wird dabei das Verhältnis des Laufbahnradius zum Radius der Oberfläche des Rollierwerkzeugs verstanden. Durch die Kombination der Verwendung eines Spitzbogens als Profil für das Rollierwerkzeug und die enge Schmiegung des Rollierwerkzeugs zu den Laufbahnen ist es den Erfindern gelungen, trotz der Tatsache, dass die Zustellrichtung des Rollierwerkzeugs nicht mit der Erstreckungsrichtung der Stützrippen zusammenfällt, zu verhindern, dass die Stützrippen beim Einrollieren der Laufschiene in die Führungsschiene seitlich wegknicken. Darüber hinaus kann durch die enge Schmiegung sichergestellt werden, dass die Laufbahnen beim Einrollieren der Laufschiene nicht beschädigt werden.

Ferner ist es besonders vorteilhaft, wenn die Zustellrichtung des Rollierwerkzeugs mit jeder der Lastübertragungsrichtungen einen von Null verschiedenen Winkel einschließt. Im Falle einer Laufschiene mit zwei Laufbahnen ist es besonders bevorzugt, wenn die Zustellrichtung des Rollierwerkzeugs mit den beiden Lastübertragungsrichtungen im Wesentlichen den gleichen Winkel einschließt, da dann die Gesamtkraft, die aus den beiden auf die Laufbahnen ausgeübten Rollierkräften resultiert, im Wesentlichen in Zustellrichtung verläuft.

Zur Erzielung einer hohen Fertigungspräzision wird vorgeschlagen, dass das Rollierwerkzeug in mehreren Zustellstufen zugestellt wird.

Darüber hinaus kann es vorteilhaft sein, wenn die Führungsschiene vor dem Einrollieren der wenigstens einen Laufschiene, vorzugsweise spanlos, vorkalibriert wird.

Produktionszeit und damit Produktionskosten können eingespart werden, wenn die Verformung der Stützrippen, die Ausbildung der Haltelaschen und des wenigstens einen weiteren einrollierten Abschnitts gleichzeitig vorgenommen wird.

Nach einem weiteren Gesichtspunkt betrifft die vorliegende Erfindung nach Anspruch 22 ein Verfahren zur Herstellung einer erfindungsgemäßen Linearführungseinrichtung, bei welchem die Führungsschiene nach dem Einrollieren der Laufschiene in deren Laufbahnen geführt und dabei die Bodenfläche der Führungsschiene abgefräst wird. Auf diese Weise kann die Lage der Laufschiene relativ zu einer übergeordneten Konstruktionseinheit, auf der die Führungsschiene mit ihrer Bodenfläche aufsteht, präzise festgelegt werden.

Die Erfindung wird im Folgenden anhand der beiliegenden Zeichnung an einigen Ausführungsbeispielen näher erläutert werden. Es stellt dar:
- Fig. 1: eine grobschematische Stirnansicht einer erfindungsgemäßen Linearführungseinrichtung;
- Fig. 2: eine Stirnansicht der Führungsschiene der in Fig. 1 dargestellten Linearführungseinrichtung in einem Zustand vor dem Einrollieren der Laufschienen;
- Fig. 3: eine schematische Ansicht zur Erläuterung des Einrollier-Prozesses; und
- Fig. 4 und 5: Detailansichten der Führungsschienen weiterer erfindungsgemäßer Linearführungseinrichtungen.

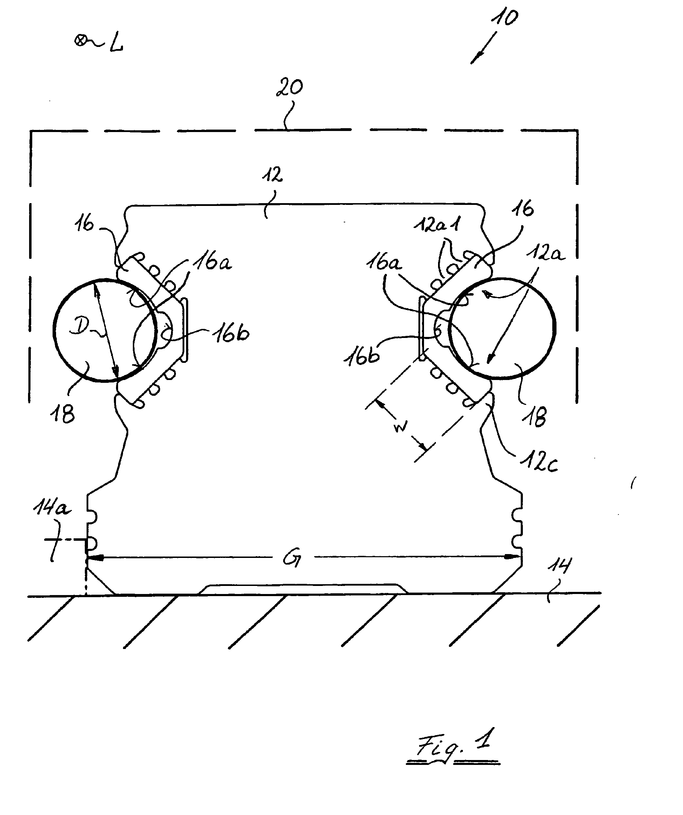

In Fig. 1 ist eine erfindungsgemäße Linearführungseinrichtung ganz allgemein mit 10 bezeichnet. Sie umfasst eine Führungsschiene 12, die mittels nicht dargestellter Befestigungselemente auf einer übergeordneten Konstruktionseinheit, beispielsweise einer Montageplatte 14, befestigt ist. In den beiden Seitenflächen der Führungsschiene 12 ist jeweils eine Laufschiene 16 angeordnet, welche an ihrer von der Führungsschiene 12 weg weisenden Oberfläche jeweils zwei lasttragende Oberflächenabschnitte bzw.

Laufbahnen 16a umfasst, die durch einen lastfreien Abschnitt 16b voneinander getrennt sind, d.h. einen Abschnitt 16b, über den im Betrieb der Linearführungseinrichtung 10 keine Kräfte zwischen der Führungsschiene 12 und dem (in Fig. 1 lediglich durch eine gestrichelte Linie schematisch dargestellten) Führungswagen 20 ausgetauscht werden.

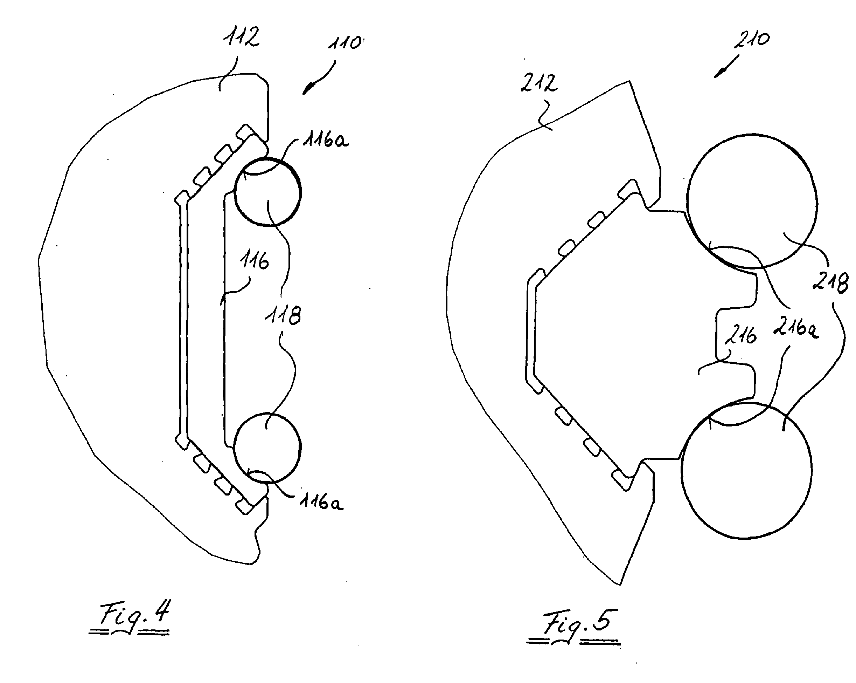

In den Laufbahnen 16a jeder Laufschiene 16 laufen jeweils die Wälzkörper 18 eines nicht näher dargestellten endlosen Wälzkörperumlaufs des Führungswagens 20, der auf der Führungsschiene 12 in deren Längsrichtung L verschiebbar geführt ist. Obgleich bei der Ausführungsform gemäß Fig. 1 jede der Kugeln 18 sich an beiden Laufbahnen 16a der ihr zugeordneten Laufschiene 16 abstützt, sei bereits an dieser Stelle darauf hingewiesen, dass die Erfindung auch bei solchen Linearführungseinrichtungen mit Vorteil eingesetzt werden kann, bei denen jeder Laufbahn 116a (siehe Fig. 4) bzw. 216a (siehe Fig. 5) ein gesonderter Wälzkörperumlauf mit seinen Wälzkörpern 118 bzw. 218 zugeordnet ist. Was die erfindungsgemäßen Details der Befestigung der Laufschienen 116 bzw. 216 an der Führungsschiene 112 bzw. 212 der Linearführungseinrichtung 110 bzw. 210 anbelangt, unterscheiden sich die Ausführungsformen gemäß Fig. 4 und 5 jedoch nicht von der nachfolgend noch näher zu beschreibenden Ausführungsform gemäß Fig. 1.

Darüber hinaus ist festzuhalten, dass die Erfindung nicht nur bei Linearführungseinrichtung mit Vorteil zum Einsatz kommen kann, bei denen der Führungswagen 20 auf der Führungsschiene 12 mittels endloser Wälzkörperumläufe geführt ist, sondern auch bei solchen Linearführungseinrichtung, bei denen der Führungswagen auf der Führungsschiene mittels Rollen geführt ist.

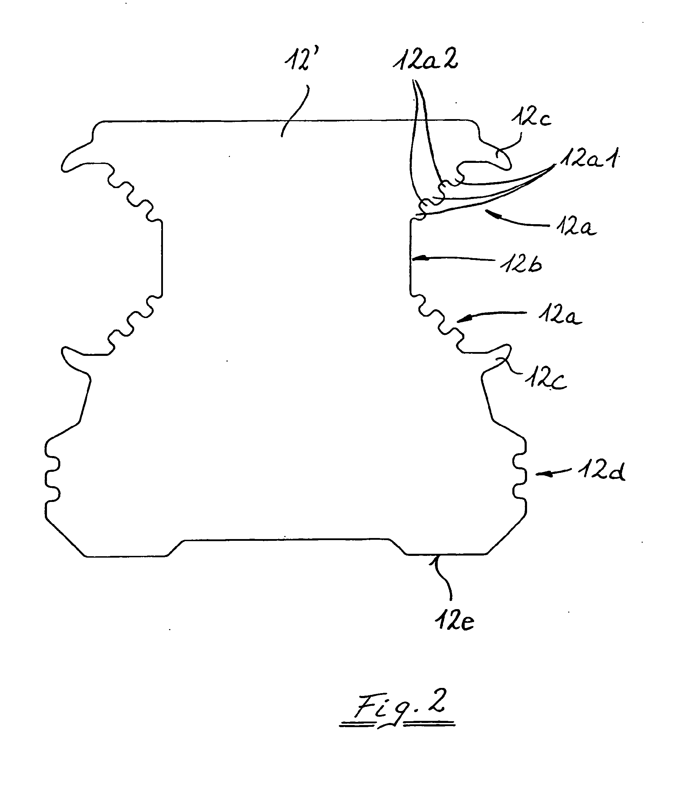

Bei der Herstellung der Führungsschiene 12 der in Fig. 1 dargestellten Linearführungseinrichtung wird erfindungsgemäß von einem Rohling 12' ausgegangen, wie er in Fig. 2 dargestellt ist. Dieser Rohling 12' ist als Strangpressprofil aus einem Leichtmetall oder einer Leichtmetalllegierung, beispielsweise Aluminium oder einer Aluminiumlegierung, hergestellt und kann gewünschtenfalls vor der weiteren Verarbeitung noch einem, vorzugsweise spanlosen, Kalibrierschritt unterzogen worden sein. In dem Bereich, in welchem bei der Führungsschiene 12 die Laufschiene 16 angeordnet ist, weist der Rohling 12' folgende Gestalt auf:

In jenen beiden Abschnitten, in denen sich die die Laufbahnen 16a aufweisenden Abschnitte der Laufschiene 16 abstützen, verfügt der Rohling 12' über zwei Bereiche 12a, von denen jeder drei Stützrippen 12a1 aufweist, die durch Täler 12a2 voneinander getrennt sind. Zwischen den beiden Bereichen 12a verfügt der Rohling 12' über eine Vertiefung 12b, die auch bei der fertig hergestellten Führungsschiene 12 nicht mit der Laufschiene 16 in Kontakt tritt. Am oberen und unteren Rand wird die von den Bereichen 12a und 12b gebildete Anordnung noch von jeweils einem Vorsprung 12c begrenzt, auf den weiter unten noch näher einzugehen sein wird. Schließlich sei noch auf die Bereiche 12d hingewiesen, die der Bodenfläche 12e des Rohlings benachbart bzw. an diese angrenzend angeordnet und ebenfalls mit Rippen und Tälern ausgebildet sind. Auch auf diese Bereiche 12d wird weiter unten noch näher eingegangen werden.

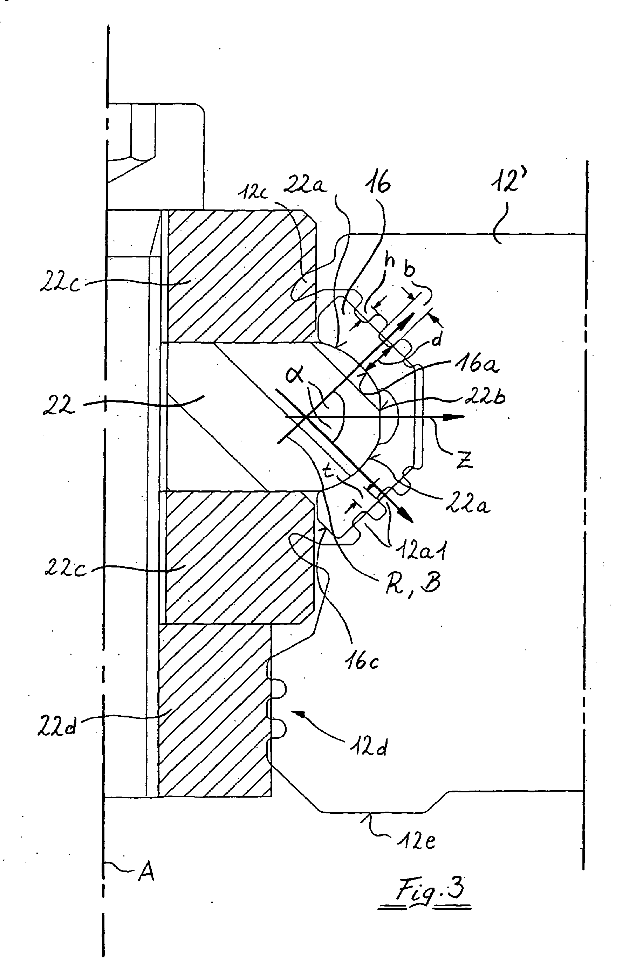

Wie in Fig. 3 grobschematisch dargestellt ist, wird die Laufschiene 16 an dem Führungsschienen-Rohling 12' durch einen Einrollier-Prozess befestigt. Hierbei wird ein sich um die Achse A drehendes Einrollier-Werkzeug 22 schrittweise in einer Zustellrichtung Z seitlich in Richtung auf den Führungsschienen-Rohling 12' zu zugestellt und drückt die Laufschiene 16 mit deren die Laufbahnen 16a aufweisenden Abschnitten gegen die Stützrippen 12a1. Hierdurch werden die Spitzen der Stützrippen 12a1 plastisch verformt, was in Fig. 3 grobschematisch durch die Überschneidung der Umrisslinien der Stützrippen 12a1 mit der Umrisslinie der Laufschiene 16 angedeutet ist. Damit die Stützrippen 12a1 im Zuge dieses Einrollier-Prozesses nicht seitlich, d.h. in Zustellrichtung Z wegknicken, wird die vom Einrollierwerkzeug 22 ausgehende Kraft in Richtung der Erstreckungsrichtung R der Stützrippen 12a1 umgelenkt, welche zudem mit der späteren Betriebslastübertragungsrichtung B zusammenfällt. Dies wird erfindungsgemäß dadurch erreicht, dass das Einrollierwerkzeug 22 an seinem mit der Laufschiene 16 in Eingriff stehenden Oberflächenabschnitt mit einem Profil ausgebildet ist, das sich eng an die Laufbahnen 16a der Laufschiene 16 anschmiegt. Da die beiden Laufbahnen 16a bei dem in Fig. 1 dargestellten Ausführungsbeispiel der Linearführungseinrichtung 10 zusammen ein gotisches Spitzbogenprofil bilden, ist diese Profilform auch für den Oberflächenabschnitt 22a des Einrollierwerkzeugs 22 bevorzugt. Zwischen den beiden Oberflächenabschnitten 22a verfügt das Einrollierwerkzeug 22 ferner über einen Abschnitt 22b, in welchem es nicht auf die Laufschiene 16 einwirkt.

Da die Erstreckungsrichtungen R der den beiden Laufbahnen 16a der Laufschiene 16 zugeordneten Gruppen von Stützrippen 12a1 mit der Zustellrichtung Z des Einrollierwerkzeugs 22 den gleichen Winkel α einschließen, ergeben die auf die beiden Gruppen von Stützrippen 12a1 einwirkenden Kräfte eine resultierende Gesamtkraft, die in Zustellrichtung Z weist.

Wie in Fig. 3 durch die Überschneidung der Vorsprünge 12c des Führungsschienen-Rohlings 12' mit den Bereichen 22c des Rollierwerkzeugs 22 angedeutet ist, wirkt das Rollierwerkzeug 22 beim Zustellen in Richtung Z auch auf diese Vorsprünge 12c ein. Hierdurch werden die Vorsprünge 12c derart verformt, dass sie sich an die Seitenflächen 16c der Laufschiene 16 anlegen (siehe Fig. 1). Auf diese Weise bilden die Vorsprünge 12c des Führungsschienen-Rohlings 12' in der fertig hergestellten Führungsschiene 12 (siehe Fig. 1) Haltelaschen, welche die Laufschienen 16 formschlüssig an der Führungsschiene 12 halten.

Schließlich weist das Rollierwerkzeug 22 noch einen Bereich 22d auf, der beim Zustellen des Rollierwerkzeugs 22 in Zustellrichtung Z auf die Rippen-und-Tal-Anordnung 12d einwirkt, die an den Seitenflächen des Führungsschienen-Rohlings 12' dessen Bodenfläche 12e benachbart ausgebildet ist. Die verformten Rippen-und-Tal-Anordnungen 12d bilden somit bei der fertigen Führungsschiene 12 weitere rollierte Bereiche, welche einer Verbiegung der Führungsschiene 12 beim Einrollieren der Laufschiene 16 entgegenwirkt. Bei der Anordnung und Bemessung der Größe und Anzahl der weiteren rollierten Bereiche braucht lediglich darauf geachtet zu werden, dass der Schwerpunkt der durch Rollieren verformten Querschnittsfläche (d.h. einschließlich der der Laufschiene 16 zugeordneten einrollierten Bereiche) im Wesentlichen mit dem Schwerpunkt der Gesamtquerschnittsfläche des Führungsschienen-Rohlings 12' bzw. der Führungsschiene 12 zusammenfällt.

Darüber hinaus kann wenigstens einer der weiteren rollierten Bereiche 12d als Anschlagskante dienen, mit welcher die Führungsschiene 12 an einem Justiervorsprung 14a der Montageplatte 14 anliegt. Hierdurch kann sichergestellt werden, dass die Führungsschiene 12 tatsächlich den gewünschten, beispielsweise geradlinigen, Verlauf nimmt.

Wie in Fig. 3 angedeutet ist, kann das Einrollieren der Laufschiene 16, das Verformen der Vorsprünge 12c und das Ausbilden der weiteren einrollierten Bereiche 12d gleichzeitig in einem Arbeitsgang vorgenommen werden.

Um eine präzise Relativanordnung der Laufschienen 16 bezüglich der übergeordneten Konstruktionseinheit 14 (siehe Fig. 1) gewährleisten zu können, kann die Führungsschiene 12 samt einrollierten Laufschienen 16 beispielsweise mittels Wälzkörpern 18 an den Laufbahnen 16a der Laufschienen 16 gehalten werden und kann die Bodenfläche 12e der Führungsschiene 12 mittels eines relativ zu den Wälzkörpern 18 präzise ausgerichteten (nicht dargestellten) Werkzeugs spanend bearbeitet, beispielsweise abgefräst, werden.

Bei der Bemessung der Höhe h und der Breite b der Stützrippen 12a1 sowie der Breite t der diese Stützrippen voneinander trennenden Täler sowie der Dicke d der Laufschiene 16 (siehe Fig. 3) sollte Folgendes beachtet werden:

Im Fall der Führung des Führungswagens 20 auf der Führungsschiene 12 mittels wenigstens eines endlosen Wälzkörperumlaufs sollte die Dicke d der Laufschiene 16 zwischen etwa 10% und etwa 35% des Durchmessers der Wälzkörper 18 betragen. Ferner sollte das Verhältnis der Summe der Breiten b der einer Laufbahn 16a zugeordneten Stützrippen 12a1 zum Durchmesser der Wälzkörper 18 zwischen etwa 30% und etwa 60% betragen. Das Verhältnis der Summe der Breiten b der einer Laufschiene 16 zugeordneten Stützrippen 12a1 zur Gesamtbreite der Laufschiene 16 zwischen etwa 50% und etwa 70% betragen. Schließlich sollte das Verhältnis der Höhe h einer Stützrippe 12a1 zur Breite b derselben Stützrippe 12a1 zwischen etwa 0,5 und etwa 1,5 betragen. Grundsätzlich ist es ferner möglich, die Stützrippen 12a1 mit unterschiedlicher Höhe h auszubilden.

Bei all diesen Betrachtungen sollte ferner berücksichtigt werden, dass das Material der Führungsschiene 12 nach dem Aufheben der Einrollier-Kraft wieder geringfügig elastisch zurückfedert. Der sich ergebende Rückfederweg kann aber aufgrund der bekannten mechanischen Eigenschaften des Materials der Führungsschiene 12 sowie der beim Einrollieren auf die Führungsschiene 12 einwirkenden Kräfte mit für die Praxis ausreichender Präzision vorherberechnet werden. Darüber hinaus wird die Bodenfläche 12e der Führungsschiene 12 nach dem Einrollieren, wie vorstehend beschrieben, noch spanend bearbeitet, wobei die Laufbahnen 16a der Laufschienen 16 als Referenz dienen.

Nachzutragen ist noch, dass jeder Laufbahn 16a der Laufschiene 16 eine ungerade Anzahl von Stützrippen 12a1 zugeordnet ist. Hierdurch kann in einfacher Weise sichergestellt werden, dass die Betriebslast-Übertragungslinie B von der Laufschiene 16 unmittelbar durch eine der Stützrippen 12a1, nämlich vorzugsweise die mittlere Stützrippe, verläuft. Dies stellt eine besonders steife Abstützung der Laufbahn 16a sicher.

Nachzutragen ist ferner Folgendes: Da die Laufschienen 16 nach dem Kaltumformen nicht mehr spanend bearbeitet werden, ist darauf zu achten, dass die Oberfläche des Rohmaterials frei von Verunreinigungen ist. Zumindest ein Teil dieser Verunreinigungen würde sich sonst nach dem Kaltumformen in der Laufbahnoberfläche befinden, was deren Haltbarkeit beeinträchtigen würde. Wie dies aus dem Stand der Technik bekannt ist, wird daher auch bei der Herstellung der erfindungsgemäß eingesetzten Laufschienen das Rohmaterial vor der Kaltumformung geschält, d.h. die äußerste mit Zunder verunreinigte Oberflächenschicht wird spanend entfernt, beispielsweise durch Fräsen oder Drehen.

Nachdem die Laufschienen 16 dann mittels eines Umformungsverfahrens in die gewünschte Gestalt gebracht worden sind, müssen sie noch gehärtet werden, was üblicherweise mit einer hohen Hitzeeinwirkung einhergeht. Da hierbei die Gefahr besteht, dass die Oberfläche der Laufschiene oxidiert, verzundert oder dergleichen, was zur Reinigung wieder eine spanende Bearbeitung erforderlich machen würde, werden die erfindungsgemäß eingesetzten Laufschienen im Vakuum gehärtet, damit die Laufbahnen nicht durch die hohe Hitzeeinwirkung beschädigt werden.

Nachzutragen ist schließlich noch, dass die Laufschienen 16 an der Führungsschiene 12 in axialer Richtung, d.h. in Längsrichtung L der Führungsschiene 12, durch Kleben, durch an den Stirnseiten der Führungsschiene 12 angebrachte Endkappen oder durch Formschluss gegen ein unerwünschtes Verrutschen gesichert werden können. Der Formschluss kann beispielsweise durch Vorsehen einer Mehrzahl von Kerben in den Längsrändern der Laufschienen 16 und Einrollieren der Haltelaschen 12c in diese Kerben erhalten werden.

In der Praxis können die Führungsschienen 12 je nach Größe der Linearführungseinrichtung 10 beispielsweise wie in der folgenden Tabelle zusammengefasst ausgebildet sein:

| Größe G der Führungsschiene [mm] | Kugeldurchmesser D [mm] | Breite w der Stahleinlage [mm] | Gesamtbreite der Rippen [mm] | Oberflächengüte Rz [µm] | Anzahl der Rippen | Dicke d der Stahleinlage [mm] | Schmiegung |
|---|---|---|---|---|---|---|---|
| 15 | 3,500 | 2,325 | 1,6 | 0,8 | 3 | 0,75 | 0,58 |
| 20 | 5,000 | 3,325 | 1,9 | 0,6 | 3 | 1,20 | 0,56 |
| 25 | 5,556 | 3,585 | 1,9 | 0,4 | 3 | 1,35 | 0,55 |
| 30 | 6,500 | 4,315 | 2,5 | 0,3 | 5 | 1,50 | 0,54 |
| 35 | 8,000 | 5,225 | 3,4 | 0,1 | 5 | 1,85 | 0,53 |

Die Größe G der Führungsschiene 12 bezieht sich dabei auf die Breite des Fußabschnitts, mit dem die Führungsschiene 12 auf der übergeordneten Montageeinheit 14 aufsteht (siehe Fig. 1). Unter der Breite w der Laufschiene 16 wird die auf eine Laufbahn 16a bezogene Breite verstanden, und auch die Anzahl sowie die Gesamtbreite der Rippen bezieht sich auf eine der Laufbahnen 16a der Laufschiene 16. Als Schmiegung wird das Verhältnis des Radius der Laufbahn 16a zum Radius der Oberfläche des Rollierwerkzeugs 22 bzw. der Wälzkörper 18 bezeichnet.

## Patentansprüche

1. Linearführungseinrichtung (10) mit einer sich in einer Längsrichtung (L) erstreckenden Führungsschiene (12) und einem auf der Führungsschiene (12) in Längsrichtung (L) geführten Führungswagen (20),
wobei an der Führungsschiene (12) wenigstens eine Laufschiene (16) angeordnet ist, und
wobei die wenigstens eine Laufschiene (16) wenigstens zwei Laufbahnen (16a) unterschiedlicher Lastübertragungsrichtung (B) aufweist, welche durch einen lastfreien Oberflächenabschnitt (16b) voneinander getrennt sind,
wobei die Führungsschiene (12) aus weicherem Material und die Laufschiene (16) aus härterem Material gebildet ist und die Laufschiene (16) mittels Einrollieren mit der Führungsschiene (12) verbunden ist,
**dadurch gekennzeichnet, dass** die Führungsschiene (12) in den den Laufbahnen (16a) der Laufschiene (16) zugeordneten Oberflächenabschnitten (12a) jeweils mit einer Mehrzahl von Stützrippen (12a1) ausgebildet ist, und
dass die ein und derselben Laufbahn (16a) zugeordneten Stützrippen (12a1) im Wesentlichen parallel zu der Lastübertragungsrichtung (B) dieser Laufbahn (16a) ausgerichtet sind.

2. Linearführungseinrichtung nach Anspruch 1,
**dadurch gekennzeichnet, dass** die Laufschiene (16) nur in den Laufbahnen (16a) zugeordneten Abschnitten an der Führungsschiene (12) abgestützt ist.

3. Linearführungseinrichtung nach Anspruch 1 oder 2,
**dadurch gekennzeichnet, dass** einer Laufbahn (16a) einer Laufschiene (16) eine ungerade Anzahl von Stützrippen (12a1), vorzugsweise drei Stützrippen (12a1), zugeordnet ist.

4. Linearführungseinrichtung nach Anspruch 3,
**dadurch gekennzeichnet, dass** die Betriebslast-Übertragungslinie (B) durch die mittlere Stützrippe (12a1) verläuft.

5. Linearführungseinrichtung nach Anspruch 3 oder 4,
**dadurch gekennzeichnet, dass** die mittlere Stützrippe (12a1) breiter ausgebildet ist als die ihr benachbarten Stützrippen (12a1).

6. Linearführungseinrichtung nach einem der Ansprüche 1 bis 5,
**dadurch gekennzeichnet, dass** die Laufschiene (16) aus kaltumgeformtem, vorzugsweise kaltgewalztem, Material, vorzugsweise Stahl, gefertigt ist.

7. Linearführungseinrichtung nach einem der Ansprüche 1 bis 6,
**dadurch gekennzeichnet, dass** wenigstens zwei Laufbahnen (16a) zusammen ein Spitzbogen-Profil bilden.

8. Linearführungseinrichtung nach einem der Ansprüche 1 bis 7,
**dadurch gekennzeichnet, dass** die Laufschiene (16) an der Führungsschiene (12) durch wenigstens eine an der Führungsschiene (12) vorgesehene Lasche (12c) gehalten ist.

9. Linearführungseinrichtung nach einem der Ansprüche 1 bis 8,
**dadurch gekennzeichnet, dass** die Führungsschiene (12) ein stranggepresstes Profilmaterial aus Leichtmetall oder einer Leichtmetalllegierung, vorzugsweise aus Aluminium oder einer Aluminiumlegierung, ist.

10. Linearführungseinrichtung nach einem der Ansprüche 1 bis 9,
**dadurch gekennzeichnet, dass** die Führungsschiene (12) in einem durch das Einrollieren der wenigstens einen Laufschiene (16) an sich nicht verformten Abschnitt (12d), beispielsweise ihrem Fußabschnitt, wenigstens einen weiteren rollierten Abschnitt aufweist.

11. Linearführungseinrichtung nach Anspruch 10,
**dadurch gekennzeichnet, dass** der Schwerpunkt der verformten Querschnittsfläche (12a, 12d) der Führungsschiene (12) mit dem Schwerpunkt der gesamten Querschnittsfläche der Führungsschiene (12) im Wesentlichen zusammenfällt.

12. Linearführungseinrichtung nach einem der Ansprüche 1 bis 11,
**dadurch gekennzeichnet, dass** im Fall der Führung des Führungswagens (20) auf der Führungsschiene (12) mittels wenigstens eines endlosen Wälzkörperumlaufs die Dicke (d) der Laufschiene (16) zwischen etwa 10% und etwa 35% des Durchmessers (D) der Wälzkörper (18) beträgt.

13. Linearführungseinrichtung nach einem der Ansprüche 1 bis 12,
**dadurch gekennzeichnet, dass** das Verhältnis der Summe der Breiten (b) der einer Laufschiene (16) zugeordneten Stützrippen (12a1) zur Gesamtbreite (W) der Laufschiene (16) zwischen etwa 50% und etwa 70% beträgt.

14. Linearführungseinrichtung nach einem der Ansprüche 1 bis 13,
**dadurch gekennzeichnet, dass** im Fall der Führung des Führungswagens (20) auf der Führungsschiene (12) mittels wenigstens eines endlosen Wälzkörperumlaufs das Verhältnis der Summe der Breiten (b) der einer Laufbahn (16a) zugeordneten Stützrippen (12a1) zum Durchmesser (D) der Wälzkörper (18) zwischen etwa 30% und etwa 60% beträgt.

15. Linearführungseinrichtung nach einem der Ansprüche 1 bis 14,
**dadurch gekennzeichnet, dass** das Verhältnis der Höhe (h) einer Stützrippe (12a1) zur Breite (b) derselben Stützrippe (12a1) zwischen etwa 0,5 und etwa 1,5 beträgt.

16. Verfahren zur Herstellung einer Linearführungseinrichtung nach einem der vorhergehenden Ansprüche, **dadurch gekennzeichnet, dass** man ein Rollierwerkzeug (22) mit einem Spitzbogen-Profil verwendet, welches eine sehr enge Schmiegung zu den Laufbahnen (16a) aufweist.

17. Verfahren nach Anspruch 16,
**dadurch gekennzeichnet, dass** die Zustellrichtung (Z) des Rollierwerkzeuges (22) mit jeder der Lastübertragungsrichtungen (B) einen von Null verschiedenen Winkel (α) einschließt.

18. Verfahren nach Anspruch 17,
**dadurch gekennzeichnet, dass** im Falle einer Laufschiene (16) mit zwei Laufbahnen (16a) die Zustellrichtung (Z) des Rollierwerkzeuges (22) mit den beiden Lastübertragungsrichtungen (B) im Wesentlichen den gleichen Winkel (α) einschließt.

19. Verfahren nach einem der Ansprüche 16 bis 18,
**dadurch gekennzeichnet, dass** das Rollierwerkzeug (22) in mehreren Zustellstufen zugestellt wird.

20. Verfahren nach einem der Ansprüche 16 bis 19,
**dadurch gekennzeichnet, dass** die Führungsschiene vor dem Einrollieren der wenigstens einen Laufschiene, vorzugsweise spanlos, vorkalibriert wird.

21. Verfahren nach einem der Ansprüche 16 bis 20,
**dadurch gekennzeichnet, dass** die Verformung der Stützrippen (12a1), die Ausbildung der Haltelaschen (12c) und des wenigstens einen weiteren einrollierten Abschnitts (12d) gleichzeitig vorgenommen wird.

22. Verfahren zur Herstellung einer Linearführungseinrichtung nach einem der Ansprüche 1 bis 15 und gewünschtenfalls in Kombination mit den Merkmalen eines der Ansprüche 16 bis 21, **dadurch gekennzeichnet, dass** die Führungsschiene (12) nach dem Einrollieren der Laufschiene (16) in deren Laufbahnen (16a) geführt und dabei die Bodenfläche (12e) der Führungsschiene (12) abgefräst wird.

## Claims

1. A linear guide unit (10), having a guide rail (12) extending in a longitudinal direction (L) and a guide carriage (20) that is guided in the longitudinal direction (L) on the guide rail (12);
at least one running rail (16) is provided on the guide rail (12);
the at least one running rail (16) has at least two races (16a) that have different load transmission directions (B) and are separated from each other by a load-free surface section (16b); and
the guide rail (12) is comprised of a softer material and the running rail (16) is comprised of a harder material and the running rail (16) is attached to the guide rail (12) by means of roller insertion,
**characterized in that**
in the surface sections (12a) associated with the races (16a) of the running rail (16), the guide rail (12) is provided with a plurality of supporting ribs (12a1); and
the supporting ribs (12a1) associated with one and the same race (16a) are aligned substantially parallel to the load transmission direction (B) of this race (16a).

2. The linear guide unit as recited in claim 1,
wherein the running rail (16) is supported against the guide rail (12) only in the sections associated with races (16a).

3. The linear guide unit as recited in claim 1 or 2,
wherein a race (16a) of a running rail (16) is associated with an odd number of supporting ribs (12a1), preferably three supporting ribs (12a1).

4. The linear guide unit as recited in claim 3,
wherein the operating load transmission line (B) extends through the center supporting rib (12a1).

5. The linear guide unit as recited in claim 3 or 4,
wherein the center supporting rib (12a1) is embodied as wider than the supporting ribs (12a1) adjacent to it.

6. The linear guide unit as recited in any one of claims 1 to 5,
wherein the running rail (16) is manufactured out of a cold-formed, preferably cold-rolled, material, preferably steel.

7. The linear guide unit as recited in any one of claims 1 to 6,
wherein at least two races (16a) combine to form a pointed arch profile.

8. The linear guide unit as recited in any one of claims 1 to 7,
wherein the running rail (16) is secured to the guide rail (12) by means of at least one tab (12c) provided on the guide rail (12).

9. The linear guide unit as recited in any one of claims 1 to 8,
wherein the guide rail (12) is an extrusion molded profile material comprised of light metal or a light metal alloy, preferably aluminum or an aluminum alloy.

10. The linear guide unit as recited in any one of claims 1 to 9,
wherein the guide rail (12) has at least one additional rolled section in a region (12d) that is not intrinsically deformed by the roller insertion of the at least one running rail (16), for example in its base section.

11. The linear guide unit as recited in claim 10,
wherein the center of gravity of the deformed cross-sectional area (12a, 12d) of the guide rail (12) substantially coincides with the center of gravity of the overall cross-sectional area of the guide rail (12).

12. The linear guide unit as recited in any one of claims 1 to 11,
wherein when the guide carriage (20) is guided on the guide rail (12) by means of at least one endless recirculating roller system, the thickness (d) of the running rail (16) is between approximately 10% and approximately 35% of the diameter (D) of the roller elements (18).

13. The linear guide unit as recited in any one of claims 1 to 12,
wherein the ratio of the sum of the widths (b) of the supporting ribs (12a1) associated with a running rail (16) to the overall width (w) of the running rail (16) is between approximately 50% and approximately 70%.

14. The linear guide unit as recited in any one of claims 1 to 13,
wherein when the guide carriage (20) is guided on the guide rail (12) by means of at least one endless recirculating roller system, the ratio of the sum of the widths (b) of the supporting ribs (12a1) associated with a race (16a) to the diameter (D) of the roller elements (18) is between approximately 30% and approximately 60%.

15. The linear guide unit as recited in any one of claims 1 to 14,
wherein the ratio of the height (h) of a supporting rib (12a1) to the width (b) of the same supporting rib (12a1) is between approximately 0.5 and approximately 1.5.

16. A method for manufacturing a linear guide unit as recited in any one of the preceding claims,
wherein a roller insertion tool (22) is used, which has a pointed arch profile and a very snug fit in relation to the races (16a).

17. The method as recited in claim 16,
wherein the advancing direction (Z) of the roller insertion tool (22) encloses an angle (α) not equal to zero with each of the load transmission directions (B).

18. The method as recited in claim 17,
wherein when a running rail (16) has two races (16a), the advancing direction (Z) of the roller insertion tool (22) encloses substantially the same angle (α) with both of the load transmission directions (B).

19. The method as recited in any one of claims 16 to 18,
wherein the roller tool (22) is advanced in a plurality of advancing stages.

20. The method as recited in any one of claims 16 to 19,
wherein the guide rail is pre-calibrated, preferably in a non-cutting manner, before the roller insertion of the at least one running rail.

21. The method as recited in any one of claims 16 to 20,
wherein the deforming of the supporting ribs (12a1), the production of the securing tabs (12c), and the production of the at least one additional roller-inserted section (12d) are all carried out simultaneously.

22. A method for manufacturing a linear guide unit as recited in any one of claims 1 to 15, and optionally in combination with the features of any one of claims 16 to 21,
wherein the guide rail (12), after the roller insertion of the running rail (16), is guided along the races (16a) thereof and in so doing, the bottom surface (12e) of the guide rail (12) is milled off.

## Revendications

1. Système de guidage linéaire (10) comprenant un rail de guidage (12) s'étendant en direction longitudinale (L) et un chariot de guidage (20) guidé en direction longitudinale (L) sur le rail de guidage (12),
dans lequel au moins un rail mobile (16) est agencé sur le rail de guidage (12), et
ledit au moins un rail mobile (16) présente au moins deux voies de déplacement (16a) présentant des directions de transfert de charges (B) différentes, qui sont séparées l'une de l'autre par une portion de surface (16b) non chargée,
dans lequel le rail de guidage (12) est formé en un matériau plus tendre et le rail mobile (16) en un matériau plus dur, et le rail mobile (16) est relié au rail de guidage (12) par galetage,
**caractérisé en ce que**
le rail de guidage (12) est réalisé avec une pluralité de nervures de soutien (12a1) dans les tronçons de surface (12a) respectifs associés aux voies de déplacement (16a) du rail mobile (16), et
les nervures de soutien (12a1) associées à une seule et même voie de déplacement (16a) sont orientées sensiblement parallèlement à la direction de transfert de charges (B) de cette voie de déplacement (16a).

2. Système de guidage linéaire selon la revendication 1,
**caractérisé en ce que** le rail mobile (16) est soutenu sur le rail de guidage (12) uniquement dans les tronçons associés aux voies de déplacement (16a).

3. Système de guidage linéaire selon la revendication 1 ou 2,
**caractérisé en ce qu'**un nombre impair de nervures de soutien (12a1), de préférence trois nervures de soutien (12a1), est associé à une voie de déplacement (16a) d'un rail mobile (16).

4. Système de guidage linéaire selon la revendication 3,
**caractérisé en ce que** la ligne de transfert de charges en service (B) passe par la nervure de soutien médiane (12a1).

5. Système de guidage linéaire selon la revendication 3 ou 4,
**caractérisé en ce que** la nervure de soutien médiane (12a1) est réalisée plus large que les nervures de soutien qui lui sont voisines (12a1).

6. Système de guidage linéaire selon l'une des revendications 1 à 5,
**caractérisé en ce que** le rail mobile (16) est réalisé en un matériau mis en forme à froid, de préférence laminé à froid, de préférence en acier.

7. Système de guidage linéaire selon l'une des revendications 1 à 6,
**caractérisé en ce qu'**au moins deux voies de déplacement (16a) forment ensemble un profil en ogive.

8. Système de guidage linéaire selon l'une des revendications 1 à 7,
**caractérisé en ce que** le rail mobile (16) est maintenu sur le rail de guidage (12) par au moins une patte (12c) prévue sur le rail de guidage (12).

9. Système de guidage linéaire selon l'une des revendications 1 à 8,
**caractérisé en ce que** le rail de guidage (12) est un profilé en matériau extrudé, en métal léger ou en un alliage de métal léger, de préférence en aluminium ou en alliage d'aluminium

10. Système de guidage linéaire selon l'une des revendications 1 à 9,
**caractérisé en ce que** le rail de guidage (12) comprend, dans un tronçon (12d) non déformé par lui-même du fait du galetage dudit au moins un rail mobile (16), par exemple son tronçon de pied, au moins un autre tronçon formé par roulement.

11. Système de guidage linéaire selon la revendication 10,
**caractérisé en ce que** le centre de gravité de la surface de section transversale (12a, 12d) déformée du rail de guidage (12) coïncide sensiblement avec le centre de gravité de la surface de section transversale totale du rail de guidage (12).

12. Système de guidage linéaire selon l'une des revendications 1 à 11,
**caractérisé en ce que**, dans le cas du guidage du chariot de guidage (20) sur le rail de guidage (12) au moyen d'au moins un système sans fin à recirculation de corps de roulement, l'épaisseur (d) du rail mobile (16) est entre environ 10 % et environ 35 % du diamètre (D) des corps de roulement. (18).

13. Système de guidage linéaire selon l'une des revendications 1 à 12,
**caractérisé en ce que** le rapport de la somme des largeurs (b) des nervures de soutien (12a1) associées à un rail mobile (16) sur la largeur totale (w) du rail mobile (16) est entre environ 50 % et environ 70 %.

14. Système de guidage linéaire selon l'une des revendications 1 à 13,
**caractérisé en ce que**, dans le cas du guidage du chariot de guidage (20) sur le rail de guidage (12) au moyen d'au moins un système sans fin à recirculation de corps de roulement, le rapport de la somme des largeurs (b) des nervures de soutien (12a1) associées à une voie de déplacement (16a) sur le diamètre (D) des corps de roulement (18) est entre environ 30 % et environ 60 %.

15. Système de guidage linéaire selon l'une des revendications 1 à 14,
**caractérisé en ce que** le rapport de la hauteur (h) d'une nervure de soutien (12a1) sur la largeur (b) de la même nervure de soutien (12a1) est entre environ 0,5 et environ 1,5.

16. Procédé pour la réalisation d'un système de guidage linéaire selon l'une des revendications précédentes,
**caractérisé en ce que** l'on utilise un outil de roulement (22) avec un profil en ogive, qui présente une forme qui épouse étroitement celle des voies de déplacement (16a).

17. Procédé selon la revendication 16,
**caractérisé en ce que** la direction d'approche (Z) de l'outil de roulement (22) définit avec chacune des directions de transfert de charges (B) un angle (α) différent de zéro.

18. Procédé selon la revendication 17,
**caractérisé en ce que** dans le cas d'un rail mobile (16) avec deux voies de déplacement (16a), la direction d'approche (Z) de l'outil de roulement (22) définit avec les deux directions de transfert de charges (B) sensiblement le même angle (α).

19. Procédé selon l'une des revendications 16 à 18,
**caractérisé en ce que** l'outil de roulement (22) est approché en plusieurs stades d'approche.

20. Procédé selon l'une des revendications 16 à 19,
**caractérisé en ce que** le rail de guidage est préalablement calibré, de préférence sans enlèvement de matière, avant le galetage dudit au moins un rail mobile.

21. Procédé selon l'une des revendications 16 à 20,
**caractérisé en ce que** la déformation des nervures de soutien (12a1), la réalisation des pattes de maintien (12c) et dudit au moins un autre tronçon (12d) formé par galetage sont exécutées simultanément.

22. Procédé pour la réalisation d'un système de guidage linéaire selon l'une des revendications 1 à 15, et en option en combinaison avec les caractéristiques de l'une des revendications 16 à 21, **caractérisé en ce que**, après le galetage du rail mobile (16), le rail de guidage (12) est guidé dans ses voies de déplacement (16a), et la surface de fond (12e) du rail de guidage (12) est alors fraisée.
